# EUROPEAN PATENT SPECIFICATION

(11) **EP 3 339 593 B1**
(45) Date of publication and mention of the grant of the patent: **03.04.2019**
(21) Application number: 17203439.9
(22) Date of filing: 24.11.2017
(51) Int. Cl.: F01N 3/20, F01N 13/18, B62D 21/03

(54) **VEHICLE BODY STRUCTURE**
FAHRZEUGAUFBAUSTRUKTUR
STRUCTURE DE CARROSSERIE DE VÉHICULE

(30) Priority: 20.12.2016 JP 2016246338
(43) Date of publication of application: 27.06.2018
(73) Proprietor: Mitsubishi Jidosha Kogyo K.K., Tokyo 108-8410 (JP); Mitsubishi Jidosha Engineering K.K., Aichi 444-8501 (JP)
(72) Inventor: Yamamoto, Masahiro, Minato-ku, Tokyo 108-8410 (JP); Sano, Takayuki, Minato-ku, Tokyo 108-8410 (JP); Inden, Kazuto, Okazaki-shi,, Aichi 444-8501 (JP)
(74) Representative: Vossius & Partner Patentanwälte Rechtsanwälte mbB

(56) References cited:
- WO-A1-2011/085154
- JP-A- 2009 108 850
- US-A1- 2013 220 470
- US-A1- 2015 232 127

## Description

### FIELD

The present invention relates to a vehicle body structure of a vehicle having a pipe for supplying an additive for purifying exhaust gas, the pipe being disposed under the floor.

### BACKGROUND

A conventional vehicle equipped with a system for purifying the exhaust gas by reducing the components of the exhaust gas has been known for mounting thereon a tank for containing an additive having an action to reduce a substance to be purified. In cases where the substance to be purified is nitrogen oxides (NOx), an additive such as aqueous urea or ammonia solution is stored in the tank. It is proposed that tank is arranged, for example, under/below the floor of the vehicle (e.g., Japanese patent application no. JP 2009 108850 A). This layout saves the interior space and can avoid lowering the comfortability of the vehicle interior in case of a leak of the additive.

The additive stored in the tank is sucked up by a pump in accordance with the running state of the engine and is fed to an additive injector through a pipe routed under/beneath the floor. The additive injector is arranged upstream of a selective reduction catalyst disposed in the exhaust gas path. A layout that arranges the tank and the additive injector distant from each other prolongs the length of the pipe, therefore having a possibility of largely lowering fittability of the pipe. As one of the solutions to the above, a detachable connector (coupler) is disposed on the piping route, so that the pipe can be fit in a unit of a short range. However, a pipe arranged under the floor is easily affected by a ricocheted rock from the road, and deformation in the vicinity of the connector may cause clogging or leaking of the additive.

### SUMMARY

### TECHNICAL PROBLEMS

With the foregoing problems in view, one of the object of the present invention is to provide a vehicle body structure body enhancing the fittability and the protectability of a pipe serving as a path for supplying an additive for purifying exhaust gas.

### SOLUTION TO PROBLEMS

(1) A vehicle body structure disclosed herein includes: a floor panel that forms a floor of a vehicle; a pipe that is disposed adjacently to a lower face of the floor panel and that serves as a path for supplying an additive for purifying exhaust gas; a cross member that protrudes downwards from the floor panel and that extends in a width direction of the vehicle; and a connector that is disposed in a step portion defined by the cross member and the floor panel and that detachably connects the pipe.

The cross member is preferably a front floor across member disposed in a front portion of the floor panel. The connector is preferably disposed in a step portion formed behind the cross member with respect to the vehicle.
(2) Preferably, the vehicle body structure further includes a side member that protrudes downwards from the floor panel, that is connected to the cross member, and that extends in a front-to-rear direction of the vehicle. In this case, the connector is preferably disposed behind the cross member and adjacently to a front portion of the side member.
(3) Preferably, the vehicle body structure further includes a backbone side member that is spaced apart from the side member with respect to the width direction, that extends along the front-to-rear direction of the vehicle, and that is connected to the cross member. In this case, the connector is preferably disposed between the side member and the backbone side member when seen from a bottom of the vehicle.
(4) The connector is preferably disposed so as to obliquely connect a bottom face of the cross member and the bottom face of the floor panel when seen from a side of the vehicle.
(5) Preferably, the vehicle body structure further includes a first fixer that fixes the pipe to the floor panel at a portion behind the connector of the vehicle; and a second fixer that fixes the pipe to the cross member at a portion ahead of the connector of the vehicle.

### ADVANTAGEOUS EFFECTS

Interposing the connector in the pipe at the step portion defined by the cross member and the floor panel enhances the fittability and the protectability of the pipe.

### BRIEF DESCRIPTION OF DRAWINGS

The nature of this invention, as well as other objects and advantages thereof, will be explained in the following with reference to the accompanying drawings, in which like reference characters designate the same or similar parts throughout the figures and wherein:

FIG. 1 is a bottom view illustrating a vehicle adopting a vehicle body structure of an embodiment;
FIG. 2 is an enlarged perspective view of a connector and the periphery thereof; and
FIG. 3 is a sectional view of a connector and the periphery thereof.

### DESCRIPTION OF EMBODIMENTS

Description will now be made in relation to a vehicle body structure according to an embodiment with reference to the accompanying drawings. The following embodiment is merely exemplary and does not intend to exclude various modifications and application of another technique that are not explicitly suggested in the description. Each element of the embodiment can be variously modified and carried out without departing from the concept of the embodiment. The elements of the embodiment can be selected or omitted according to the requirement and can also be combined occasionally.

### 1. Structure

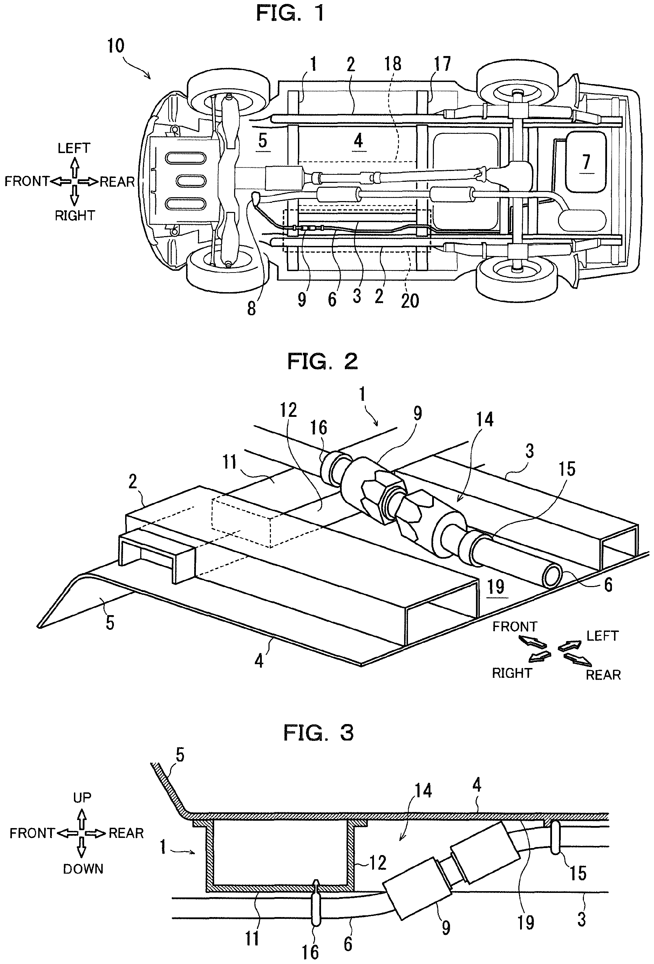

The vehicle body structure of the present embodiment is applied to a vehicle 10 illustrated in FIG. 1. Under the floor of the vehicle 10, a resin tank storing an additive (e.g., aqueous urea or ammonia solution) for a urea Selective Catalytic Reduction system (urea SCR system). A urea SCR system is one of the types of exhaust-gas purifying system that purifies nitrogen oxides (NOx) contained in the exhaust gas from the engine. The urea SCR system of the present embodiment is configured by disposing aqueous urea injector 8 upstream of the NOx selective reduction catalyst interposed in an exhaust-air path and routing the pipe 6 through which the tank 7 is connected to the aqueous urea injector 8. The aqueous urea injected from the aqueous urea injector 8 becomes ammonia by hydrolysis, and the resultant ammonia serves as a reduction agent that reduces NOx in the exhaust gas to nitrogen on the catalyst. A urea SCR system of this type is widely used in, for example, a vehicle, a construction machine, a ship, a power plant utilizing a diesel engine or a lean-burn engine.

The pipe 6 is routed on a side of a bottom face 19 (lower side) of a floor panel 4 of the vehicle 10. The floor panel 4 is a flat member serving as the floor of the vehicle interior. A dash panel 5, which partitions the vehicle interior from the engine room, is arranged so as to stand on the front end portion of the floor panel 4. The dash panel 5 extends diagonally upwards in the forward direction from the floor panel 4. The floor panel 4 and the dash panel 5 may be formed independently from each other or may be of an integral form (e.g., formed by bending a single plate). In cases where the floor panel 4 and dash panel 5 are of independent forms, a cross member 1 is disposed on a boundary between the floor panel 4 and the dash panel 5. In contrast, in cases where the floor panel 4 and the dash panel 5 are of an integral form, the dash panel 5 is partitioned from the floor panel 4 on the basis of the position of the cross member 1, as illustrated in FIG. 2. In either case, the cross member 1 is disposed at the front end portion of the floor panel 4 (in other words, the rear end portion of the dash panel 5).

On the side of the bottom face 19 of the floor panel 4, the cross member 1 (front floor cross member) and side members 2 are disposed which function as frame members of the vehicle body. The cross member 1 is disposed so as to extend in the width (right-to-left) direction of the vehicle 10; and the side members 2 are disposed so as to extend in the front-to-rear direction of the vehicle 10. As illustrated in FIG. 1, a pair of side members 2 of the present embodiment are disposed at positions slightly inside from the left side face and the right side face of the vehicle 10 so as to be spaced apart in the width direction of the vehicle 10 from each other. The cross member 1 is arranged so as to be connected to the left and right side members 2 at the front end portion of the floor panel 4. Preferably, the cross member 1 penetrates both side members 2 and extends to the outer side of the side members 2. This allows the floor panel 4 to be supported by the cross member 1 over the entire width.

The cross member 1 and the side members 2 are formed into respective shapes protruding downwards from the floor panel 4. The cross member 1 is integrated with floor panel 4 by welding the rail member of the hat-shaped section opened upward to the bottom face 19 of the floor panel 4. Likewise, each side member 2 is integrated with floor panel 4 by welding the rail member of the hat-shaped section opened upward to the bottom face 19 of the floor panel 4. The height of the cross member 1 (the length from the bottom face 19 of the floor panel 4 to a bottom face 11 of the cross member 1) is set to be smaller than the height of each side member 2 (the length from the bottom face 19 of the floor panel 4 to the bottom face of the side member 2).

The portion from the middle to the rear end of the floor panel 4 in the front-to-rear direction is supported by a rear floor cross member 17. The rear floor cross member 17 is disposed behind the cross member 1 so as to be spaced apart from the cross member 1 in the front-to-rear direction and extends in the width direction of the vehicle 10. With this configuration, the bottom face 19 of the floor panel 4 is supported crosswise by the cross member 1, the pair of side members 2, and the rear floor cross member 17, so that the stiffness and the strength of the floor face of the vehicle interior are ensured. A fuel tank is disposed behind the rear floor cross member 17 and the shaft of the rear wheels are disposed behind the fuel tank. Behind the shaft of the rear wheels, a silencer (muffler) which is disposed at the rear end portion of the exhaust air path, and an additive tank 7 are arranged in parallel with each other with respect to the width direction of the vehicle 10.

Along the center of the floor panel 4 with respect to the width direction of the vehicle 10, a backbone 18 (swelling portion) being in the form of a tunnel extending in the front-to-rear direction and swelling towards the vehicle interior is formed. A drive shaft that transmits the driving force to the rear wheels and the exhaust-air path (exhaust pipe) are arranged under the backbone 18. A backbone side member 3, which is spaced apart from the right side member 2 in the width direction of the vehicle and which extends in the front-to-rear direction, is disposed between the backbone 18 and the side member 2 when seen from the bottom of the vehicle 10.

The backbone side member 3 is a rail member having a hat-shaped section opened upwards and is welded to the bottom face 19 of the floor panel 4. In the present embodiment, the front end portion of the backbone side member 3 is connected to the cross member 1 while the rear end portion of the backbone side member 3 is connected to the rear floor cross member 17. The height of the backbone side member 3 (the length from the bottom face 19 of the floor panel 4 to the bottom face of the backbone side member 3) is set about the same as the height of the cross member 1 (the length from the bottom face 19 of the floor panel 4 to a bottom face 11 of the cross member 1).

FIG. 2 is a perspective view illustrating the bottom face 19 of the floor panel 4 upside. The pipe 6 is arranged so as to pass through a longitudinal space surrounded by the side member 2, the backbone side member 3, and the floor panel 4. In the step portion 14 defined by the cross member 1 and the floor panel 4, a connector 9 that detachably connects the pipe 6 is disposed. The step portion 14 here is a space behind the rear face 12 of the cross member 1, below the bottom face 19 of the floor panel 4 and sandwiched by the right side member 2 and the backbone side member 3.

The connector 9 is a one-touch joint that can be easily connected and disconnected by hand. The connector 9 has a male or female fitting portion at the tip and the fitting portion has an outer circumference set larger than that of the pipe 6. The connector 9 is disposed adjacently to the front end portions of the side member 2 and the backbone side member 3 in a portion behind the cross member 1, and is disposed between the side member 2 and the backbone side member 3. Here, the front end portion is a portion at least ahead of the midway between the cross member 1 and the rear floor cross member 17.

As illustrated in FIG. 3, the pipe 6 is fixed to the vehicle body at two points sandwiching the connector 9 with a first fixer 15 and a second fixer 16. Specifically, the first fixer 15 fixes the pipe 6 to the bottom face 19 of the floor panel 4 at a portion behind the connector 9 while the second fixer 16 fixes the pipe 6 to the bottom face 11 of the cross member 1 at a portion ahead of the connector 9. The first fixer 15 and second fixer 16 are fixing bands made of metal or resin.

Each of the first fixer 15 and the second fixer 16 includes a ring portion wrapped around the circumference of the pipe 6 and a fixing portion fixed to the vehicle body. The fixing portion of the first fixer 15 is fixed to a stud drooping from the floor panel 4. The fixing portion of the second fixer 16 is fixed by being placed in an installing hole formed on the bottom face 11 of the cross member 1. Alternatively, the first fixer 15 and the second fixer 16 may be fixed to the vehicle body in any known manner except to the above.

As illustrated in FIG. 3, the connector 9 is arranged so as to obliquely connect (extend between) the bottom face 11 of the cross member 1 and the bottom face 19 of the floor panel 4 when seen from the side of the vehicle. In other words, the pipe 6 is not routed in a crank manner along the shape of the step portion 14, but is obliquely routed so as to pass the shortest route from the bottom face 11 of the cross member 1 to the position of the first fixer 15. Inclining the route path of the pipe 6 in the step portion 14 as the above prevents the outer circumference of the connector 9 from interfering with the floor panel 4, so that the connector 9 is inhibited from being constrained.

As illustrated with the broken lines in FIG. 1, an undercover 20 is installed to the rectangular portion surrounded by the cross member 1, the side member 2, the backbone side member 3, and the rear floor cross member 17 when seen from the bottom of the vehicle 10. The undercover 20 planarly covers the lower portions of the pipe 6 and the connector 9. The circumference edge of the undercover 20 is fixed to, for example, the cross member 1, the side member 2, the backbone side member 3, and the rear floor cross member 17. This effectively prohibit chipping abrasion and deformation due to a ricocheted rock from the road and soiling due to mud fluid, so that the protectability of the connector 9 and pipe 6 can be enhanced.

### 2. Effects and Advantages

(1) Interposing the connector 9 in the pipe 6 can easily separate a forward pipe portion (a portion connected to the aqueous urea injector 8) installed at a position near to the engine from a rear pipe portion (a portion connected to the tank 7) installed at a position distant from the engine. This configuration allows the forward pipe portion to be installed to the engine assembly in the process of assembling the engine and also allows the rear pipe portion to be installed to the vehicle body in the process of assembling the vehicle body. Accordingly, the fittability of the pipe 6 can be enhanced. In addition to the above, arranging the connector 9 in the step portion 14 inhibits the outer circumference of the connector 9 from interfering with the floor panel 4, so that the protectability of the connector 9 and the pipe 6 can be enhanced.
(2) Since the connector 9 is arranged adjacently to the front end portion of the side member 2, which has relatively high stiffness among various parts of the vehicle body, the connector 9 can be protected in cases where an external load is applied to the vehicle body. Consequently, the protectability of the connector 9 and the pipe 6 can be enhanced. The side portions of the step portion 14 can be protected by the side member 2, so that the connector 9 can be escaped from being deformed or broken by a ricocheted rock from the road. Consequently, the protectability of the connector 9 and the pipe 6 can be enhanced.
(3) The connector 9 is disposed in a space sandwiched by the side member 2 and the backbone side member 3. The side member 2 and the backbone side member 3 make it possible to further enhance the stiffness of the step portion 14, so that the protectability of the connector 9 and the pipe 6 can be enhanced. The side portion of the step portion 14 can be covered with the side member 2 and the backbone side member 3, so that the connector 9 can be more surely escaped from being deformed or broken. Consequently, the protectability of the connector 9 and the pipe 6 can be enhanced.
(4) As illustrated in FIG. 3, obliquely routing the connector 9 when seen from the side can prevent the outer circumference of the connector 9 from interfering with the floor panel 4, so that the protectability of the connector 9 and the pipe 6 can be enhanced. Additionally, since the pipe 6 is routed so as to pass the shortest route from the bottom face 11 of the cross member 1 to the position of the first fixer 15, the occurrence of slack and deviation of the pipe 6 can be suppressed. Consequently, the protectability of the connector 9 and the pipe 6 can be enhanced.
(5) The first fixer 15 is fixed to the bottom face 19 of the floor panel 4 and the second fixer 16 is fixed to the bottom face 11 of the cross member 1. Arranging two fixers (i.e., the first fixer 15 and the second fixer 16) ahead and behind the connector 9 can stabilize the state of fixing the connector 9 to the vehicle body, so that the protectability of the connector 9 can be enhanced. In addition to the above, fixing the pipe 6 at two positions different in height can easily incline the routing shape of the connector 9 when seen from the side, so that the protectability of the connector 9 and the pipe 6 can be further enhanced.

### 3. Modification

The description of the above embodiment is made in relation to a urea SCR system, but the additive conveyed through the pipe 6 is not limited to aqueous urea. An exhaust-gas purifying system using a NOx selective reduction catalyst sometimes uses ammonia solution in place of the aqueous urea. An exhaust-gas purifying system using a diesel particulate filter (DPF) may inject hydrocarbon (HC, unburned fuel) into the exhaust pipe in order to encourage particulate matter (PC) to burn. Accordingly, the above vehicle body structure can be applied to an exhaust-gas purifying system supplying ammonia or hydrocarbon in place of aqueous urea.

The invention thus described, it will be obvious that the same may be varied within the scope of the appended claims.

### REFERENCE SIGNS LIST

- 1: cross member
- 2: side member
- 3: backbone side member
- 4: floor panel
- 5: dash panel
- 6: pipe
- 7: tank
- 8: aqueous urea injector
- 9: connector
- 10: vehicle
- 11: bottom face
- 12: rear face
- 14: step portion
- 15: first fixer
- 16: second fixer
- 17: rear floor cross member
- 18: backbone
- 19: bottom face
- 20: under cover

## Claims

1. A vehicle body structure comprising:
a floor panel (4) that forms a floor of a vehicle (10);
a pipe (6) that is disposed adjacently to a lower face (19) of the floor panel (4) and that serves as a path for supplying an additive for purifying exhaust gas; and
a cross member (1) that protrudes downwards from the floor panel (4) and that extends in a width direction of the vehicle (10); the vehicle body structure being **characterised by**
a connector (9) that is disposed in a step portion (14) defined by the cross member (1) and the floor panel (4) and that detachably connects the pipe (6).

2. The vehicle body structure according to claim 1, further comprises a side member (2) that protrudes downwards from the floor panel (4), that is connected to the cross member (1), and that extends in a front-to-rear direction of the vehicle (10), wherein the connector (9) is disposed behind the cross member (1) and adjacently to a front portion of the side member (2).

3. The vehicle body structure according to claim 2, further comprises a backbone side member (3) that is spaced apart from the side member (2) with respect to the width direction, that extends along the front-to-rear direction of the vehicle (10), and that is connected to the cross member (1), wherein the connector (9) is disposed between the side member (2) and the backbone side member (3) when seen from a bottom of the vehicle (10) .

4. The vehicle body structure according to any one of claims 1-3, wherein the connector (9) is disposed so as to obliquely connect a bottom face (11) of the cross member (1) and the bottom face (19) of the floor panel (4) when seen from a side of the vehicle (10).

5. The vehicle body structure according to any one of claims 1-4, further comprising:
a first fixer (15) that fixes the pipe (6) to the floor panel (4) at a portion behind the connector (9) of the vehicle (10); and
a second fixer (16) that fixes the pipe (6) to the cross member (1) at a portion ahead of the connector (9) of the vehicle (10).

## Patentansprüche

1. Fahrzeugkarosseriestruktur, mit:
einer Bodenplatte (4), die einen Boden eines Fahrzeugs (10) bildet;
einem Rohr (6), das benachbart zu einer unteren Fläche (19) der Bodenplatte (4) angeordnet ist und als ein Pfad zum Zuführen eines Additivs zum Reinigen von Abgas dient; und
einem Querträger (1), der von der Bodenplatte (4) nach unten hervorsteht und sich in einer Breitenrichtung des Fahrzeugs (10) erstreckt;
wobei die Fahrzeugkarosseriestruktur **gekennzeichnet ist durch**
einen Verbinder (9), der in einem durch den Querträger (1) und die Bodenplatte (4) definierten Stufenabschnitt (14) angeordnet ist und das Rohr (6) lösbar verbindet.

2. Fahrzeugkarosseriestruktur nach Anspruch 1, ferner mit einem Seitenelement (2), das von der Bodenplatte (4) nach unten hervorsteht, mit dem Querträger (1) verbunden ist und sich in einer Vorwärts-Rückwärts-Richtung des Fahrzeugs (10) erstreckt, wobei der Verbinder (9) hinter dem Querträger (1) und benachbart zu einem vorderen Abschnitt des Seitenelements (2) angeordnet ist.

3. Fahrzeugkarosseriestruktur nach Anspruch 2, ferner mit einem seitlichen Trägerelement (3), das bezüglich der Breitenrichtung vom Seitenelement (2) beabstandet ist, sich entlang der Vorwärts-Rückwärts-Richtung des Fahrzeugs (10) erstreckt und mit dem Querträger (1) verbunden ist, wobei der Verbinder (9) von einer Unterseite des Fahrzeugs (10) betrachtet zwischen dem Seitenelement (2) und dem seitlichen Trägerelement (3) angeordnet ist.

4. Fahrzeugkarosseriestruktur nach einem der Ansprüche 1 bis 3, wobei der Verbinder (9) derart angeordnet ist, dass er eine Unterseite (11) des Querträgers (1) und die Unterseite (19) der Bodenplatte (4) von einer Seite des Fahrzeugs (10) aus betrachtet schräg verbindet.

5. Fahrzeugkarosseriestruktur nach einem der Ansprüche 1 bis 4, ferner mit:
einem ersten Fixierelement (15), das das Rohr (6) an einem Abschnitt hinter dem Verbinder (9) des Fahrzeugs (10) an der Bodenplatte (4) fixiert; und
einem zweiten Fixierelement (16), das das Rohr (6) an einem Abschnitt vor dem Verbinder (9) des Fahrzeugs (10) am Querträger (1) fixiert.

## Revendications

1. Structure de carrosserie de véhicule comprenant :
un panneau de plancher (4) qui forme un plancher d'un véhicule (10) ;
un tuyau (6) qui est disposé de manière adjacente à une face inférieure (19) du panneau de plancher (4) et qui sert de trajectoire pour fournir un additif afin de purifier le gaz d'échappement ; et
une traverse (1) qui fait saillie vers le bas du panneau de plancher (4) et qui s'étend dans le sens de la largeur du véhicule (10) ; la structure de carrosserie de véhicule étant **caractérisée en ce que** :
un connecteur (9) qui est disposé dans une partie de gradin (14) définie par la traverse (1) et le panneau de plancher (4) et qui raccorde, de manière détachable, le tuyau (6).

2. Structure de carrosserie de véhicule selon la revendication 1, comprenant en outre un élément latéral (2) qui fait saillie vers le bas à partir du panneau de plancher (4), qui est raccordé à la traverse (1) et qui s'étend, dans une direction avant - arrière du véhicule (10), dans laquelle le connecteur (9) est disposé derrière la traverse (1) et de manière adjacente à une partie avant de l'élément latéral (2).

3. Structure de carrosserie de véhicule selon la revendication 2, comprenant en outre un élément latéral dorsal (3) qui est espacé de l'élément latéral (2) par rapport au sens de la largeur, qui s'étend le long de la direction avant - arrière du véhicule (10), et qui est raccordé à la traverse (1), dans laquelle le connecteur (9) est disposé entre l'élément latéral (2) et l'élément latéral dorsal (3) lorsqu'il est observé depuis le fond du véhicule (10).

4. Structure de carrosserie de véhicule selon l'une quelconque des revendications 1 à 3, dans laquelle le connecteur (9) est disposé afin de raccorder, de manière oblique, une face inférieure (11) de la traverse (1) et la face inférieure (19) du panneau de plancher (4) lorsqu'il est observé depuis un côté du véhicule (10).

5. Structure de carrosserie de véhicule selon l'une quelconque des revendications 1 à 4, comprenant en outre :
une première fixation (15) qui fixe le tuyau (6) sur le panneau de plancher (4) au niveau d'une partie située derrière le connecteur (9) du véhicule (10) ; et
une seconde fixation (16) qui fixe le tuyau (6) à la traverse (1) au niveau d'une partie située devant le connecteur (9) du véhicule (10).
